(19) **Europäisches Patentamt**

**European Patent Office**

**Office européen des brevets**

(11) Veröffentlichungsnummer: **0 405 510 A2**

# (12) EUROPÄISCHE PATENTANMELDUNG

(21) Anmeldenummer: **90112271.3**

(22) Anmeldetag: **27.06.90**

(51) Int. Cl.⁵: **A01N 59/24**

(30) Priorität: **30.06.89 DE 3921569**

(43) Veröffentlichungstag der Anmeldung:
**02.01.91 Patentblatt 91/01**

(84) Benannte Vertragsstaaten:
**BE DE ES FR LU NL**

(71) Anmelder: **SKW TROSTBERG AKTIENGESELLSCHAFT**
**Dr.-Albert-Frank-Strasse 32**
**D-8223 Trostberg(DE)**

(72) Erfinder: **Behnke, Horst**
**Schlossackerstrasse 5a**
**D-8201 Obing(DE)**
Erfinder: **Rieder, Georg, Dr.**
**Traunfeldstrasse 26**
**D-8221 Stein/Traun(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**D-8000 München 86(DE)**

(54) **Verfahren zur Bewurzelung von Stecklingen.**

(57) Es wird ein Verfahren zur Bewurzelung von Stecklingen beschriebene wobei man die Stecklinge mit einer wäßrigen Cyanamidlösung behandelt. Auf diese Weise wird auch bei schwer zu bewurzelnden Pflanzenarten und -sorten schon nach wenigen Tagen eine deutlich verbesserte Wurzelbildung beobachtet.

EP 0 405 510 A2

## VERFAHREN ZUR BEWURZELUNG VON STECKLINGEN

Die vorliegende Erfindung betrifft ein Verfahren zur Bewurzelung von Stecklingen.

Die Vermehrung von Pflanzen kann üblicherweise in generativer oder vegetativer Art erfolgen. Bei einer generativen Vermehrung werden die von der Mutterpflanze direkt zum Zweck der Fortpflanzung bzw. Erhaltung der Art gebildeten Samen ausgesät, um neue Pflanzen heranzuziehen. Diese Methode hat jedoch verschiedene Nachteile. So muß z.B. abgewartet werden, bis die Mutterpflanze ihren gesamten vegetativen und generativen Wachstumszyklus abgeschlossen sowie Samen gebildet hat und diese Samen wieder ausgekeimt und zu neuen Pflanzen herangewachsen sind. Außerdem sind die Tochterpflanzen in ihren Eigenschaften, bedingt durch die genetische Variabilität, mit der Mutterpflanze nicht identisch.

Zur Vermeidung dieser Nachteile wird insbesondere bei gärtnerischen Kulturen die vegetative Vermehrung von Pflanzen bevorzugt. Dabei werden Sproßteile von der Mutterpflanze abgeschnitten, in die Erde gesteckt und durch besondere Kulturmaßnahmen versucht, die Wurzelbildung anzuregen, damit die Sproßteile zu einer voll funktionsfähigen Pflanze heranwachsen können.

In der Praxis ist die Fähigkeit, neue Wurzeln zu bilden, nicht nur von Pflanze zu Pflanze, sondern auch bei verschiedenen Sorten der gleichen Pflanzenart sehr unterschiedlich. So lassen sich bekanntermaßen Stecklinge von bestimmten Pflanzen, wie z.B. von jungen Efeutrieben (Hedera helix), sehr leicht bewurzeln, andere jedoch praktisch überhaupt nicht oder nur mit Hilfe besonderer Maßnahmen, wie z.B. die Stecklinge von älteren Efeutrieben oder der Chrysanthemen-Sorte "Salmon Shoesmith" (vgl. hierzu Weaver, R.J.: "Plant Growth Regulators in Agriculture" Freeman and Comp., San Francisco, 1972, S. 126).

Aufgrund der großen wirtschaftlichen Bedeutung der Stecklingsbewurzelung sind bereits Verfahren zur Förderung der Bewurzelung durch Behandlung der Stecklinge mit chemischen Wirkstoffen entwickelt worden, die praktische Bedeutung erlangt haben. Dazu gehört die Verwendung von Indolylbuttersäure, Indolylessigsäure und besonders Naphthylessigsäure (NAA) (siehe Nickell, L.G.: "Plant Growth Regulators-Agricultural Uses" Springer-Verlag-Berlin-Heidelberg-New York, 1982, (Seite 4 - 5)). Obwohl diese Wirkstoffe bei einer Vielzahl von Gärtnereikulturen zur Stecklingsbewurzelung erfolgreich eingesetzt werden, gibt es zahlreiche Kulturen, bei denen die genannten Produkte unzureichend oder überhaupt nicht wirken (vgl. Krüssmann, G. "Die Baumschule" Parey Verlag Berlin-Hamburg, 1981, Seiten 155-161).

Der Erfindung liegt daher die Aufgabe zugrunde, ein Verfahren zur Bewurzelung von Stecklingen zu entwickeln, welches die oben genannten Nachteile des Standes der Technik nicht aufweist, sondern auch bei schwer zu bewurzelnden Pflanzenarten bzw. -sorten eine deutliche Förderung der Wurzelbildung ermöglicht.

Die Aufgabe wird erfindungsgemäß dadurch gelöst, daß man die Stecklinge mit einer wäßrigen Cyanamidlösung behandelt.

Cyanamid wird bereits zur Abtötung von grünen, wachsenden Teilen mehrjähriger Pflanzen und von Keimlingen von Unkräutern eingesetzt (vgl. DE-AS 16 42 343 bzw. Bauer, F. "Cyanamidlösungen als Unkrautbekämpfungsmittel" Zeitschrift für Pflanzenkrankheiten und Pflanzenschutz, Verlag Eugen Ulmer, Stuttgart, 1965, Seiten 241-248). Daher ist es sehr überraschend, daß Cyanamid bei Stecklingen, die ebenfalls ein junges, aktives, wachsendes Pflanzengewebe darstellen, keinen phytotoxischen Effekt ausüben, sondern im Gegenteil die angestrebte Wurzelbildung hervorrufen.

Die Konzentration des Cyanamids kann in weiten Grenzen variiert werden und hängt im wesentlichen von der jeweiligen Pflanzensorte und der Art der Behandlung ab. In der Regel reichen jedoch Konzentrationen von 10 bis 50 000 ppm, vorzugsweise 200 bis 20 000 ppm aus, um den gewünschten Effekt der verbesserten Wurzelbildung zu erzielen.

Die Menge der erforderlichen wäßrigen Cyanamidlösung richtet sich ebenfalls vor allem nach der zu behandelnden Pflanzensorte und der Behandlungsmethode und beträgt in der Regel 0,1 bis 10 ml pro zu behandelndem Pflanzenteil bzw. Steckling.

Gegebenenfalls können die erfindungsgemäß eingesetzten wäßrigen Cyanamidlösungen noch übliche Stabilisatoren wie Magnesiumsalze gemäß der DE-OS 32 19 054 oder Carbonsäureester gemäß der DE-OS 26 42 043 enthalten.

Die Behandlung der Stecklinge kann mit den üblichen Vorrichtungen und nach bekannten Methoden erfolgen. besonders einfach ist das Besprühen der Stecklinge mit einer wäßrigen Cyanamidlösung, wobei die Stecklinge bis zur vollständigen Benetzung behandelt werden. Gegebenenfalls kann durch Zusatz von Netzmitteln die Benetzung gefördert werden.

Ebenfalls können die Stecklinge in die Wirkstofflösung eingetaucht werden, wobei die Behandlungszeiten üblicherweise 1 bis 20 Minuten, insbesondere 5 bis 10 Minuten, betragen. Jedoch können auch kürzere oder längere Eintauchzeiten angewendet werden.

Die Behandlung mit der Cyanamidlösung kann auch dann erfolgen, wenn die Stecklinge bereits in ein entsprechendes Kul tursubstrat eingesteckt wurden. Hierbei ist es möglich, entweder das entsprechende Kultursubstrat vorher oder nachher, oder nur die eingesetzten Stecklinge oder die eingesetzten Stecklinge und das Kultursubstrat gemeinsam zu behandeln.

Gemäß einer bevorzugten Ausführungsform behandelt man den zu bewurzelnden Pflanzenteil zunächst mit der wäßrigen Cyanamidlösung und umhüllt diesen anschließend mit einer Substratschicht bestehend beispielsweise aus Holzspänen, Reispelzen, Sand o.ä. Diese Methode wird als sogenanntes Abmoosverfahren bezeichnet.

Bei allen Behandlungsmethoden zeigt sich schon nach wenigen Tagen eine deutlich verbesserte Wirkung hinsichtlich der Wurzelbildung im Vergleich zu unbehandelten Stecklingen bzw. im Vergleich zu anderen bekannten Wirkstoffen in üblichen Konzentrationen. Von besonderem Vorteil ist hierbei die Tatsache, daß das erfindungsgemäße Verfahren zur Stecklingsbewurzelung nicht nur bei den üblichen Stecklingsarten, sondern auch bei schwer zu bewurzelnden Pflanzenarten und -sorten, die sich gewöhnlich nicht für die Vermehrung durch Stecklinge eignen, erfolgreich angewendet werden kann.

Beispiel 1

Versuchsort: Coris de Cartago, Costa Rica

Kultur: Chrysanthemum ssp., Sorte "Starburst"

Versuchsdurchführung

Praxisübliche Mutterpflanzen wurden ausgewählt und ca. 5 cm lange Triebe als Stecklinge ausgewählt und geschnitten. Anschließend wurden die Stecklinge mit wäßrigen Lösungen bis zur vollständigen Benetzung besprüht (ca. 25 ml pro Behandlung), die Cyanamid in verschiedenen Konzentrationen enthielten. Als Vergleichsmittel wurde Naphthylessigsäure (NAA) verwendet. Nach der Behandlung wurden die Stecklinge in Kultursubstrat praxisüblich gesteckt und unter Gewächshausbedingungen kultiviert. Bei jedem Auswertungstermin wurden 10 Stecklinge zur visuellen Beurteilung der Wurzelbildung entnommen.

Versuchsumfang

30 Stecklinge pro Behandlung

Wiederholung: 2

Ergebnis: Tabelle 1

Tabelle 1

| | Bewurzelte Stecklinge in % | | | | | |
|---|---|---|---|---|---|---|
| | 4 Tage nach Versuchsbeg. | | | 8 Tage nach Versuchsbeg. | | |
| | 1. Wdh. | 2. Wdh. | Mittelw. | 1. Wdh. | 2. Wdh. | Mittelw. |
| unbehandelt | 30 | 10 | 20 | 30 | 60 | 45 |
| NAA 50 ppm | 20 | 0 | 10 | 10 | 50 | 30 |
| Cyanamid | | | | | | |
| 200 ppm | 50 | 60 | 55 | 100 | 100 | 100 |
| 400 ppm | 70 | 40 | 55 | 100 | 100 | 100 |
| 600 ppm | 40 | 70 | 55 | 80 | 100 | 90 |
| 800 ppm | 40 | 10 | 25 | 30 | 70 | 50 |
| 1000 ppm | 50 | 20 | 35 | 30 | 50 | 40 |
| 2000 ppm | 30 | 40 | 35 | 60 | 100 | 80 |

Beispiel 2

Versuchsort: Coris de Cartago, Costa Rica

Kultur: Chrysanthemum ssp., Sorte "Starburst"

Versuchsdurchführung: Die Versuche wurden in gleicher Weise vorbereitet wie in Beispiel 1. Für die Behandlung wurden die Stecklinge jedoch nicht mit einer wäßrigen Cyanamidlösung besprüht, sondern mit für eine Dauer von 5 Minuten vollständig in diese Testlösungen eingetaucht und anschließend wie bei Versuch 1 weiterkultiviert. Für die Beurteilung der Wurzelbildung wurden wiederum bei jedem Auswertungs-

3

termin 10 Stecklinge pro Behandlung entnommen.
Versuchsumfang: 30 Stecklinge pro Behandlung
Wiederholungen: 2
Ergebnis: Tabelle 2

Tabelle 2

| | Bewurzelte Stecklinge in % | | | | | |
|---|---|---|---|---|---|---|
| | 4 Tage nach Versuchsbeg. | | | 8 Tage nach Versuchsbeg. | | |
| | 1. Wdh. | 2. Wdh. | Mittelw. | 1. Wdh. | 2. Wdh. | Mittelw. |
| unbehandelt | 30 | 10 | 20 | 30 | 60 | 45 |
| NAA 50 ppm | 20 | 0 | 10 | 10 | 50 | 30 |
| Cyanamid | | | | | | |
| 200 ppm | 50 | 80 | 65 | 100 | 100 | 100 |
| 400 ppm | 60 | 80 | 70 | 90 | 70 | 80 |
| 600 ppm | 60 | 40 | 50 | 90 | 90 | 90 |
| 800 ppm | 10 | 20 | 15 | 60 | 100 | 80 |
| 1000 ppm | 60 | 50 | 55 | 100 | 100 | 100 |
| 2000 ppm | 30 | 30 | 30 | 90 | 100 | 95 |

In beiden Versuchen wurde die Bewurzelung nicht nur qualitativ bewertet, sondern außerdem gemessen, welche Wurzelmasse gebildet worden war. Zu diesem Zweck wurden die bewurzelten Stecklinge in einen Meßzylinder mit bekanntem Wasserinhalt eingetaucht und der dadurch erhöhte Wasserstand in ml gemessen. Das Ergebnis zeigt, daß nicht nur keine phytotoxische Wirkung zu beobachten war, sondern die gebildete Wurzelmasse (Tabelle 3) deutlich erhöht war.

Tabelle 3

| | Wurzelmasse in ml | |
|---|---|---|
| | 12 Tage nach Versuchsbeginn | |
| | Versuch 1 | Versuch 2 |
| unbehandelt | 1,75 | 1,75 |
| NAA 50 ppm | 1,10 | 1,10 |
| Cyanamid | | |
| 200 ppm | 2,50 | 3,50 |
| 400 ppm | 2,65 | 1,90 |
| 600 ppm | 2,50 | 2,00 |
| 800 ppm | 1,65 | 2,00 |
| 1000 ppm | 1,30 | 2,25 |
| 2000 ppm | 2,50 | 2,25 |

Beispiel 3
Versuchsort: Coris de Cartago, Costa Rica
Kultur: Chrysanthemum ssp., Sorte "Reflet"
Versuchsdurchführung:

4

Die Versuche wurden in gleicher Weise wie in Beispiel 1 vorbereitet. Für die Behandlung wurden die Stecklinge (5-6 cm) von den Mutterpflanzen abgeschnitten und in ein sterilisiertes Substrat (Sand und Reispelzen) gesteckt. Anschließend wurden die Stecklinge mit einer wäßrigen Cyanamidamidlösung unterschiedlicher Konzentration bis zur vollständigen Benetzung besprüht (20 ml pro Behandlung).

Versuchsumfang: 20 Stecklinge pro Behandlung
Wiederholungen: 3
Versuchsplan: Randomized block
Statistische Auswertung nach Duncan
Ergebnis: Tabelle 4

Tabelle 4

| | % Bewurzelte Stecklinge in | | Wurzelmasse in ml |
|---|---|---|---|
| | 4 Tg. n. Versuchsbeg. | 8 Tg. n. Versuchsbeg. | 12 Tg. n. Behandl. |
| unbehandelt | 16,7 | 70,0 | 2,9 |
| 200 ppm | 33,3 | 100,0 | 4,4 |
| 400 ppm | 36,7 | 96,7 | 3,2 |
| 600 ppm | 13,5 | 95,3 | 1,9 |

Auch hier wurde die Bequrzelung quantitativ gemessen (siehe Beispiel 2). Beispiel 4
Versuchsort: Coris de Cartago, Costa Rica
Kultur: Chrysanthemum ssp., Sorte "Stategman"
Versuchsdurchführung:
Die Versuche wurden in gleicher Weise wie in Beispiel 1 vorbereitet. Für die Behandlung wurden die Stecklinge (5-6 cm) von den Mutterpflanzen abgeschnitten und in ein sterilisiertes Substrat (Sand und Reispelzen) gesteckt. Anschließend wurden die Stecklinge mit einer wäßrigen Cyanamidlösung bis zur vollständigen Benetzung besprüht (20 ml pro Behandlung).
Versuchsumfang: 20 Stecklinge pro Behandlung
Wiederholungen: 3
Versuchsplan: Randomized block
Statistische Auswertung nach Duncan
Ergebnis: Tabelle 5

Tabelle 5

| | % Bewurzelte Stecklinge in | | Wurzelmasse in ml |
|---|---|---|---|
| | 4 Tg. n. Versuchsbeg. | 8 Tg. n. Versuchsbeg. | 12 Tg. n. Behandl. |
| unbehandelt | 66,7 | 93,3 | 3,1 |
| 200 ppm | 93,3 | 100,0 | 5,2 |
| 400 ppm | 73,3 | 96,0 | 2,5 |
| 600 ppm | 43,5 | 100,0 | 2,4 |

Beispiel 5

Versuchsort: Finca Sicu S.A. Herediana Limon, Costa Rica

Kultur: Dracaena marginata, grün

Versuchsdurchführung:

Die Bewurzelung der Ableger der Dracaena marginata wird üblicherweise nach dem Abmoosverfahren vorgenommen (umwickeln der Pflanzenteile mit Hobelspänen und Staniolpapier). An der zu bewurzelnden Stelle wurde 1 ml einer wäßrigen Cyanamidlösung in verschiedenen Konzentrationen aufgetragen und dann wurde das zu bewurzelnde Teil umwickelt.

Versuchsumfang: 5 Pflanzen pro Behandlung

Wiederholungen: 2

Ergebnis: Tabelle 6

Tabelle 6

| Behandlung | % angewurzelt | Anzahl Wurzeln pro Behandlung | Länge der Wurzeln pro Behandlung (mm) |
|---|---|---|---|
| unbehandelt | 10 | 2 | 2 |
| 10 000 ppm | 40 | 1 | 4 |
| 15 000 ppm | 80 | 1 | 3 |

Beispiel 6

Versuchsort: Finca Sicu S.A. Herediana Limon, Costa Rica

Kultur: Dracaena marginata, grün

Versuchsdurchführung:

Der Versuch wurde wie in Beispiel 5 vorbereitet. Zur Behandlung wurden die Hobelspäne jedoch diesmal mit 10 ml einer wäßrigen Cyanamidlösung getränkt und dann mit Staniolpapier um die zu bewurzelnden Flächen gebunden.

Versuchsumfang: 5 Pflanzen pro Behandlung

Wiederholungen: 2

Ergebnis: Tabelle 7

Tabelle 7

| Behandlung | % angewurzelt | Anzahl Wurzeln pro Behandlung | Länge der Wurzeln pro Behandlung (mm) |
|---|---|---|---|
| unbehandelt | 10 | 2 | 2 |
| 10 000 ppm | 80 | 4 | 6 |
| 15 000 ppm | 80 | 4 | 14 |

Aus Tabelle 6 und 7 geht klar hervor, daß eine höhere Anwurzelung möglich ist, die Benetzung der Holzspäne aber dem Benetzen der Wurzelfläche vorzuziehen ist.

**Ansprüche**

1. Verfahren zur Bewurzelung von Stecklingen,
**dadurch gekennzeichnet,**
daß man die Stecklinge mit einer wäßrigen Cyanamidlösung behandelt.

2. Verfahren nach Anspruch 1,
**dadurch gekennzeichnet,**
daß man die Konzentration des Cyanamids in der wäßrigen Lösung auf 10 ppm bis 50 000 ppm einstellt.

3. Verfahren nach Anspruch 2,
**dadurch gekennzeichnet,**
daß man die Konzentration des Cyanamids auf 200 ppm bis 20 000 ppm einstellt.

4. Verfahren nach den Ansprüchen 1 bis 3,
**dadurch gekennzeichnet,**
daß man die wäßrige Cyanamidlösung in einer Menge von 0,1 bis 10 ml pro zu behandelndem Pflanzenteil einsetzt.

5. Verfahren nach den Ansprüchen 1 bis 4,
**dadurch gekennzeichnet,**
daß man den zu bewurzelnden Pflanzenteil mit der Cyanamidlösung behandelt und anschließend mit einer Substratschicht umhüllt.

6. Verfahren nach den Ansprüchen 1 bis 5,
**dadurch gekennzeichnet,**
daß man die Stecklinge mit einer wäßrigen Cyanamidlösung bis zur vollständigen Benetzung besprüht.

7. Verfahren nach den Ansprüchen 1 bis 5,
**dadurch gekennzeichnet,**
daß man die Stecklinge in eine wäßrige Cyanamidlösung eintaucht.

8. Verfahren nach Anspruch 7,
**dadurch gekennzeichnet,**
daß die Eintauchzeit 1 bis 20 Minuten, insbesondere 5 bis 10 Minuten beträgt.

9. Verfahren nach den Ansprüchen 1 bis 5,
**dadurch gekennzeichnet,**
daß man die Behandlung nach dem Einstecken der Stecklinge in ein Kultursubstrat vornimmt.